# EUROPÄISCHE PATENTANMELDUNG

(11) **EP 3 276 993 A1**
(43) Veröffentlichungstag der Anmeldung: **31.01.2018**
(21) Anmeldenummer: 16181912.3
(22) Anmeldetag: 29.07.2016
(51) Int. Cl.: H04W 8/18, H04W 8/20

(54) **PROFILSERVER ZUM BEREITSTELLEN VON ELEKTRONISCHEN KOMMUNIKATIONSPROFILEN VON ELEKTRONISCHEN TEILNEHMERIDENTITÄTSMODULEN MOBILER KOMMUNIKATIONSGERÄTE**

(71) Anmelder: Deutsche Telekom AG, 53113 Bonn (DE)
(72) Erfinder: Kaliner, Stefan, 53639 Königswinter (DE)
(74) Vertreter: Patentship Patentanwaltsgesellschaft mbH

(57) **Zusammenfassung**

Die Erfindung betrifft einen Profilserver (100) zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit einer Kommunikationsschnittstelle (101), welche ausgebildet ist, eine elektronische Identifikation eines elektronischen Teilnehmeridentitätsmoduls eines mobilen Kommunikationsgeräts zu empfangen, einem Speicher (103), welcher ausgebildet ist, gerätespezifische elektronische Kommunikationsprofile für unterschiedliche Geräteklassen von mobilen Kommunikationsgeräten zu speichern, einem Prozessor (105), welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist, wobei die Kommunikationsschnittstelle (101) ausgebildet ist, das ausgelesene elektronische Kommunikationsprofil an das mobile Kommunikationsgerät auszusenden.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdrahtete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise eine zulässige Datenrate, des mit einem eSIM ausgestatteten mobilen Kommunikationsgerätes.

Im Auslieferungszustand sind die eSIMs in der Regel mit einem Bootstrapprofil versehen, welches eine initiale Konnektivität in das Kommunikationsnetzwerk ermöglicht und welches die Netzwerkadresse eines Discovery-Servers enthält. Der Discovery-Server ist vorgeschaltet und enthält die Angaben über Profilserver wie beispielsweise SMDP+ Server, welche die Kommunikationsprofile für die eSIMs verwalten.

Bei erstem Einbuchen in das Kommunikationsnetz übermittelt die eSIM die elektronische Identifikation (eID) eines eSIMs an den Discovery-Server. Dieser kann auf dieser Basis den Profilserver (z.B. SMDP+ Server) dem eSIM zuordnen und die Netzwerkadresse des Profilservers an das eSIM übertragen.

Mit steigender Anzahl Internet-fähiger mobiler Kommunikationsgeräte besteht die Aufgabe, ein effizienteres Konzept zum Bereitstellen von Kommunikationsprofilen für elektronische Teilnehmeridentifikationsmodule zu schaffen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch gerätespezifische Kommunikationsprofile gelöst werden kann. Die gerätespezifischen Kommunikationsprofile sind unterschiedlichen Geräteklassen von mobilen Kommunikationsgeräten zugeordnet, sodass eine Auswahl eines Kommunikationsprofils für ein elektronisches Teilnehmeridentifikationsmodul gerätespezifisch durchgeführt werden kann.

Gemäß einem ersten Aspekt betrifft die Erfindung einen Profilserver zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit einer Kommunikationsschnittstelle, welche ausgebildet ist, eine elektronische Identifikation eines elektronischen Teilnehmeridentitätsmoduls eines mobilen Kommunikationsgeräts zu empfangen, einem Speicher, welcher ausgebildet ist, gerätespezifische elektronische Kommunikationsprofile für unterschiedliche Geräteklassen von mobilen Kommunikationsgeräten zu speichern, einem Prozessor, welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist, wobei die Kommunikationsschnittstelle ausgebildet ist, das ausgelesene elektronische Kommunikationsprofil an das mobile Kommunikationsgerät auszusenden.

In einer Ausführungsform ist der Prozessor ausgebildet, die Geräteklasse anhand der elektronischen Identifikation zu bestimmen.

In einer Ausführungsform ist der Prozessor ausgebildet, zur Bestimmung der Geräteklasse die Kommunikationsschnittstelle anzuweisen, die empfangene elektronische Identifikation über das Kommunikationsnetzwerk an einen Datenserver, in welchem die Geräteklassen elektronischen Identifikationen zugeordnet sind, auszusenden, wobei die Kommunikationsschnittstelle ausgebildet ist, von dem Datenserver die Geräteklasse zu empfangen.

In einer Ausführungsform spezifizieren die gerätespezifischen elektronischen Kommunikationsprofile und/oder die Geräteklassen gerätespezifische Kommunikationsfähigkeiten oder Kommunikationsanforderungen, insbesondere Datenraten oder Bitfehlerraten oder Verzögerungen oder Verbindungshäufigkeiten.

In einer Ausführungsform sind die Geräteklassen durch einen numerischen Indikator bezeichnet.

In einer Ausführungsform ist in dem Speicher pro Geräteklasse genau ein gerätespezifisches elektronisches Kommunikationsprofil abgelegt.

In einer Ausführungsform ist der Prozessor ausgebildet, das ausgewählte Kommunikationsprofil benutzerspezifisch zu konfigurieren, insbesondere die Datenrate oder die Verzögerung an Kommunikationsanforderungen oder Vertragsbestimmungen eines Benutzers des mobilen Kommunikationsgerätes anzupassen.

In einer Ausführungsform ist die Kommunikationsschnittstelle eine drahtlose Kommunikationsschnittstelle, insbesondere eine LTE- oder eine UMTS-Kommunikationsschnittstelle.

Gemäß einem zweiten Aspekt betrifft die Erfindung einen Datenserver zum Bereitstellen von gerätespezifischen elektronischen Kommunikationsprofilen, mit einem Speicher, in welchem einer Mehrzahl von elektronischen Identifikationen von elektronischen Teilnehmeridentitätsmodulen von mobilen Kommunikationsgeräten gespeichert sind, wobei die elektronischen Identifikationen unterschiedlichen Geräteklassen der mobilen Kommunikationsgeräte zugeordnet sind, einer Kommunikationsschnittstelle, welche ausgebildet ist, eine elektronische Identifikation von einem Profilserver zu empfangen, wobei die Kommunikationsschnittstelle ausgebildet ist, eine Geräteklasse, welche der empfangenen elektronischen Identifikation zugeordnet ist, an den Profilsender auszusenden.

Der Datenserver kann einen Prozessor aufweisen, welche ausgebildet ist, die Geräteklasse, welche der empfangenen elektronischen Identifikation zugeordnet ist, aus dem Speicher auszulesen.

In einer Ausführungsform sind in dem Speicher die elektronischen Identifikationen unterschiedlichen Geräteklassen der mobilen Kommunikationsgeräte desselben Herstellers oder unterschiedlicher Hersteller von mobilen Kommunikationsgeräten zugeordnet.

Gemäß einem dritten Aspekt betrifft die Erfindung ein Subnetzwerk eines Kommunikationsnetzwerkes mit einer Mehrzahl von Subnetzwerken, wobei das Subnetzwerk für die Bereitstellung von Geräteklassen, welche unterschiedlichen mobilen Kommunikationsgeräten zugeordnet sind, vorgesehen ist, mit dem Datenserver nach dem zweiten Aspekt, wobei der Datenserver ausschließlich über das Subnetzwerk adressierbar ist.

In einer Ausführungsform ist das Subnetzwerk ein Punkt-zu-Punkt-Subnetzwerk, insbesondere ein Slice eines 5G-Kommunikationsnetzwerks.

Gemäß einem vierten Aspekt betrifft die Erfindung ein Verfahren zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit: Empfangen einer elektronischen Identifikation eines elektronischen Teilnehmeridentitätsmoduls eines mobilen Kommunikationsgeräts, Bestimmen einer Geräteklasse des mobilen Kommunikationsgeräts auf der Basis der empfangenen elektronischen Identifikation, Auslesen eines gerätespezifischen elektronischen Kommunikationsprofils aus einem Speicher, das der bestimmten Geräteklasse des mobilen Kommunikationsgerätes zugeordnet ist, und Aussenden des ausgelesenen elektronischen Kommunikationsprofils an das mobile Kommunikationsgerät.

Weitere Ausführungsformen der Erfindung werden Bezug nehmend auf die beiliegenden Figuren näher erläutert. Es zeigen:
- Fig. 1: einen Profilserver gemäß einer Ausführungsform; und
- Fig. 2: ein Subnetzwerk mit einem Datenserver gemäß einer Ausführungsform.

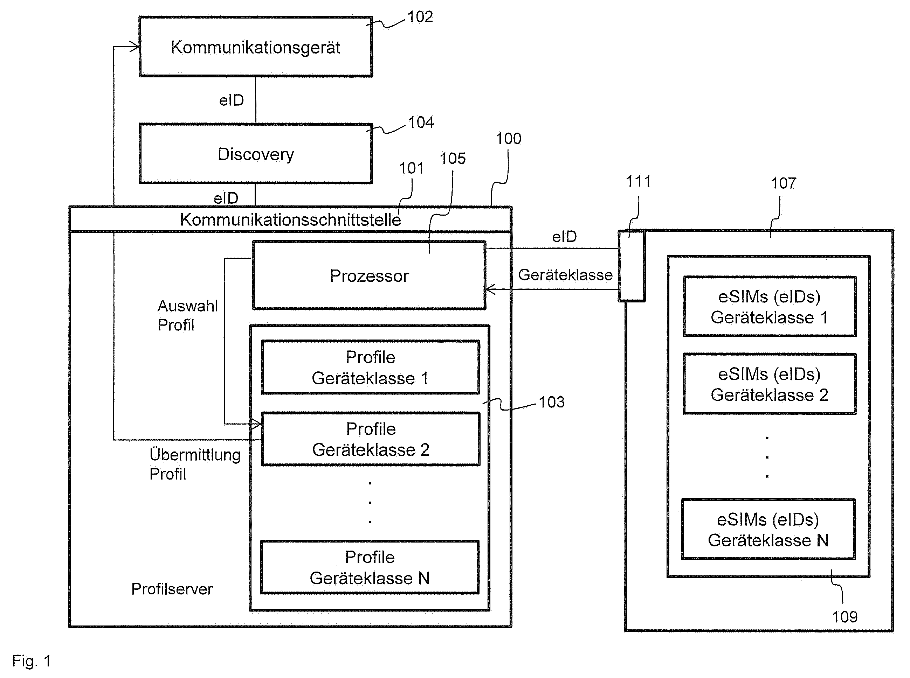

Fig. 1 zeigt einen Profilserver 100 zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit einer Kommunikationsschnittstelle 101, welche ausgebildet ist, eine elektronische Identifikation eines elektronischen Teilnehmeridentitätsmoduls eines mobilen Kommunikationsgeräts 102 zu empfangen, einem Speicher 103, welcher ausgebildet ist, gerätespezifische elektronische Kommunikationsprofile für unterschiedliche Geräteklassen von mobilen Kommunikationsgeräten zu speichern, einem Prozessor 105, welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist, wobei die Kommunikationsschnittstelle 101 ausgebildet ist, das ausgelesene elektronische Kommunikationsprofil an das mobile Kommunikationsgerät auszusenden.

In dem in Fig. 1 dargestellten Szenario ist ferner ein Discovery-Server 104 vorgesehen, um dem Kommunikationsgerät 102 die URI des Profilservers 100 zu übermitteln, ansprechend auf eine Bootstrapping-Anfrage.

In Fig. 1 ist ferner ein optionaler Datenserver 107 dargestellt. Der Datenserver 107 ist zum Bereitstellen von gerätespezifischen elektronischen Kommunikationsprofilen vorgesehen und umfasst einen Speicher 109, in welchem einer Mehrzahl von elektronischen Identifikationen von elektronischen Teilnehmeridentitätsmodulen von mobilen Kommunikationsgeräten gespeichert sind, wobei die elektronischen Identifikationen unterschiedlichen Geräteklassen der mobilen Kommunikationsgeräte zugeordnet sind, sowie eine Kommunikationsschnittstelle 111, welche ausgebildet ist, eine elektronische Identifikation von einem Profilserver zu empfangen, wobei die Kommunikationsschnittstelle 111 ausgebildet ist, eine Geräteklasse, welche der empfangenen elektronischen Identifikation zugeordnet ist, an den Profilserver 102 auszusenden.

In dem in Fig. 1 dargestellten Ausführungsbeispiel ist der Prozessor 105 ausgebildet, zur Bestimmung der Geräteklasse die Kommunikationsschnittstelle 101 anzuweisen, die empfangene elektronische Identifikation über das Kommunikationsnetzwerk an einen Datenserver 107, in welchem die Geräteklassen elektronischen Identifikationen zugeordnet sind, auszusenden, wobei die Kommunikationsschnittstelle 101 ausgebildet ist, von dem Datenserver 107 die Geräteklasse zu empfangen.

In einer Ausführungsform kann auf die Kommunikation mit dem Datenserver 107 verzichtet werden, indem der Profilserver 100 die Bestimmung der Geräteklassen beispielsweise auf der Basis der elektronischen Identifikation selbst vornimmt.

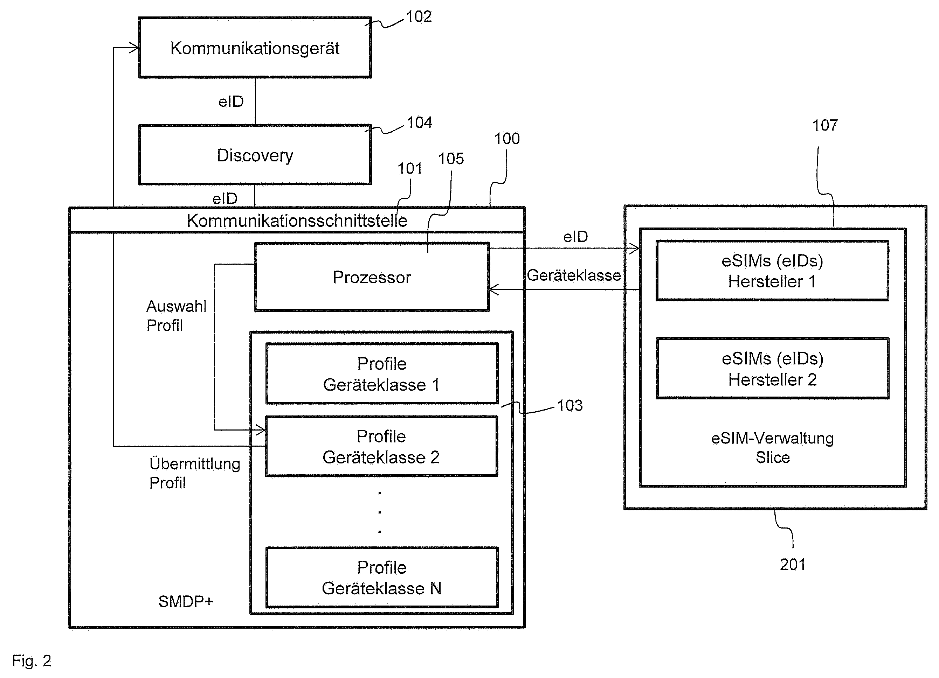

Fig. 2 zeigt ein Subnetzwerk 201 mit einem Datenserver 107 gemäß einer Ausführungsform. Die Bereitstellung von gerätespezifischen Kommunikationsmodulen für eSIMs kann durch das spezifische Punkt-zu-Punkt Subnetzwerk 201, beispielsweise ein Slice eines 5G-Kommunikationsnetzwerks, implementiert werden.

Das Subnetzwerk 201 umfasst den Datenserver 107, wobei der Datenserver 107 ausschließlich über das Subnetzwerk 201 adressierbar ist. Hierzu kann das Subnetzwerk 201 eine Subnetzwerk-Adresse aufweisen, welche dem Profilserver 100 bekannt ist. Auf diese Weise können gerätespezifische Kommunikationsprofile besonders effizient bereitgestellt werden.

Damit die gerätespezifischen Kommunikationsprofile den mobilen Kommunikationsgeräten zugeordnet werden können, werden die eSIMs gerätespezifisch verwaltet. Hierzu können in einer Ausführungsform die eSIMs gerätespezifisch gekennzeichnet werden. Diese gerätespezifische Kennzeichnung kann entweder Teil der eID sein (eID enthält einen Geräteklassen-Identifier), oder die eSIMs sind den Geräteklassen zugeordnet, sodass der Profilserver nicht auf den Datenserver 107 zugreifen muss. Diese Zuordnung kann jedoch in einer Hersteller-Datenbank implementiert werden, welche durch den Datenserver 107 realisiert ist. In einer Ausführungsform ist der Profilserver 100 ein SMDP+ Server.

Das Kommunikationsgerät 102 mit beispielsweise der Geräteklasse 2 verbindet sich mittels eines Bootstrapprofils zum Discovery Server 104, welcher die eID an den Profilserver 100 weiter leitet. Der Profilserver 100 bevorratet eine Anzahl gerätespezifischer Kommunikationsprofile.

Um dem Kommunikationsgerät 102 das entsprechende Kommunikationsprofil zuordnen zu können, initiiert der Profilserver 100 in einer Ausführungsform eine Anfrage nach der Geräteklasse an den Datenserver 107. Daraufhin wird dem Profilserver 100 die Geräteklasse 2 des Kommunikationsgerätes von dem Datenserver 107übermittelt. Mit der Geräteklasse kann der Profilserver das gerätespezifische Kommunikationsprofil für das Kommunikationsgerät auswählen.

## Patentansprüche

1. Profilserver (100) zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit:
einer Kommunikationsschnittstelle (101), welche ausgebildet ist, eine elektronische Identifikation eines elektronischen Teilnehmeridentitätsmoduls eines mobilen Kommunikationsgeräts zu empfangen;
einem Speicher (103), welcher ausgebildet ist, gerätespezifische elektronische Kommunikationsprofile für unterschiedliche Geräteklassen von mobilen Kommunikationsgeräten zu speichern;
einem Prozessor (105), welcher ausgebildet ist, auf der Basis der empfangenen elektronischen Identifikation eine Geräteklasse des mobilen Kommunikationsgeräts zu bestimmen, wobei der Prozessor ausgebildet ist, ein gerätespezifisches elektronisches Kommunikationsprofil aus dem Speicher auszulesen, das der bestimmten Geräteklasse des mobilen Kommunikationsgerätes zugeordnet ist; wobei
die Kommunikationsschnittstelle (101) ausgebildet ist, das ausgelesene elektronische Kommunikationsprofil an das mobile Kommunikationsgerät auszusenden.

2. Profilserver (100) nach Anspruch 1, wobei der Prozessor (105) ausgebildet ist, die Geräteklasse anhand der elektronischen Identifikation zu bestimmen.

3. Profilserver (100) nach einem der vorstehenden Ansprüche, wobei der Prozessor (105) ausgebildet ist, zur Bestimmung der Geräteklasse die Kommunikationsschnittstelle (101) anzuweisen, die empfangene elektronische Identifikation über das Kommunikationsnetzwerk an einen Datenserver (107), in welchem die Geräteklassen elektronischen Identifikationen zugeordnet sind, auszusenden, und wobei die Kommunikationsschnittstelle (101) ausgebildet ist, von dem Datenserver (107) die Geräteklasse zu empfangen.

4. Profilserver (100) nach einem der vorstehenden Ansprüche, wobei die gerätespezifischen elektronischen Kommunikationsprofile und/oder die Geräteklassen gerätespezifische Kommunikationsfähigkeiten oder Kommunikationsanforderungen, insbesondere Datenraten oder Bitfehlerraten oder Verzögerungen oder Verbindungshäufigkeiten, spezifizieren.

5. Profilserver (100) nach einem der vorstehenden Ansprüche, wobei die Geräteklassen durch einen numerischen Indikator bezeichnet sind.

6. Profilserver (100) nach einem der vorstehenden Ansprüche, wobei in dem Speicher (103) pro Geräteklasse genau ein gerätespezifisches elektronisches Kommunikationsprofil abgelegt ist.

7. Profilserver (100) nach einem der vorstehenden Ansprüche, wobei der Prozessor (105) ausgebildet ist, das ausgewählte Kommunikationsprofil benutzerspezifisch zu konfigurieren, insbesondere die Datenrate oder die Verzögerung an Kommunikationsanforderungen oder Vertragsbestimmungen eines Benutzers des mobilen Kommunikationsgerätes anzupassen.

8. Profilserver (100) nach einem der vorstehenden Ansprüche, wobei die Kommunikationsschnittstelle (101) eine drahtlose Kommunikationsschnittstelle, insbesondere eine LTE- oder eine UMTS-Kommunikationsschnittstelle ist.

9. Datenserver (107) zum Bereitstellen von gerätespezifischen elektronischen Kommunikationsprofilen, mit:
einem Speicher (109), in welchem einer Mehrzahl von elektronischen Identifikationen von elektronischen Teilnehmeridentitätsmodulen von mobilen Kommunikationsgeräten gespeichert sind, wobei die elektronischen Identifikationen unterschiedlichen Geräteklassen der mobilen Kommunikationsgeräte zugeordnet sind;
einer Kommunikationsschnittstelle (111), welche ausgebildet ist, eine elektronische Identifikation von einem Profilserver zu empfangen, wobei die Kommunikationsschnittstelle (111) ausgebildet ist, eine Geräteklasse, welche der empfangenen elektronischen Identifikation zugeordnet ist, an den Profilsender auszusenden.

10. Datenserver (107) nach Anspruch 9, wobei in dem Speicher (109) die elektronischen Identifikationen unterschiedlichen Geräteklassen der mobilen Kommunikationsgeräte desselben Herstellers oder unterschiedlicher Hersteller von mobilen Kommunikationsgeräten zugeordnet sind.

11. Subnetzwerk (201) eines Kommunikationsnetzwerkes mit einer Mehrzahl von Subnetzwerken, wobei das Subnetzwerk (201) für die Bereitstellung von Geräteklassen, welche unterschiedlichen mobilen Kommunikationsgeräten zugeordnet sind, vorgesehen ist, mit:
dem Datenserver (107) nach einem der Ansprüche 9 oder 10, wobei der Datenserver (107) ausschließlich über das Subnetzwerk (201) adressierbar ist.

12. Subnetzwerk (201) nach Anspruch 11, das ein Punkt-zu-Punkt-Subnetzwerk, insbesondere ein Slice eines 5G-Kommunikationsnetzwerks ist.

13. Verfahren zum Bereitstellen von elektronischen Kommunikationsprofilen von elektronischen Teilnehmeridentitätsmodulen mobiler Kommunikationsgeräte, wobei jedem elektronischen Teilnehmeridentitätsmodul eine elektronische Identifikation (eID) zugeordnet ist, wobei die mobilen Kommunikationsgeräte unterschiedlichen Geräteklassen zugeordnet sind, mit:
Empfangen einer elektronischen Identifikation eines elektronischen Teilnehmeridentitätsmoduls eines mobilen Kommunikationsgeräts;
Bestimmen einer Geräteklasse des mobilen Kommunikationsgeräts auf der Basis der empfangenen elektronischen Identifikation;
Auslesen eines gerätespezifischen elektronischen Kommunikationsprofils aus einem Speicher, das der bestimmten Geräteklasse des mobilen Kommunikationsgerätes zugeordnet ist; und
Aussenden des ausgelesenen elektronischen Kommunikationsprofils an das mobile Kommunikationsgerät.
